# EUROPEAN PATENT APPLICATION

(11) **EP 1 345 140 A1**
(43) Date of publication of application: **17.09.2003**
(21) Application number: 01271598.3
(22) Date of filing: 20.12.2001
(51) Int. Cl.: G06F 17/60, G06F 13/00, H04N 7/173

(54) **INFORMATION PROCESSING METHOD AND DEVICE, RECORDING MEDIUM, AND PROGRAM**

(30) Priority: 20.12.2000 JP 2000387242
(71) Applicant: Sony Corporation, Tokyo 141-0001 (JP)
(72) Inventor: KERLEFSEN, Jan, c/o SONY CORPORATION, Tokyo 141-0001 (JP)
(74) Representative: Turner, James Arthur
(86) International application number: JP0111200
(87) International publication number: WO02050737

(57) **Abstract**

To provide a method of information processing for enabling a content provider side to define the use of content matching the content user side while protecting a privacy of the content user side. Usage form information, that is, a usage form of content information for each of a plurality of state of a content user side, is transmitted from the server apparatus 4 to the home network system 8. The home network system 8 determines the usage form of the content information received from the content provider apparatus 2 on the basis of an internal state information indicating an internal state of the home network system 8 and the usage form information.

## Description

### TECHNICAL FIELD

The present invention relates to an information processing method, an apparatus, a storage media and a program of the same, allowing a content provider side to define a usage form of content information at a content user side according to an internal state of the content user side without invading the privacy of the content user side.

### BACKGROUND ART

A content provider transmits for example a program, an advertisement, and other content information to a terminal of a user via the Internet or other communication networks.

At this time, in order to increase the effect of the advertisement and to avoid the user being provided with a large number of advertisements the user is not interested in, the content provider selects and distributes advertisement information matching each user on the basis of personal information or preferences or other attribute information of the user or historical information of communication of the user via a communication network.

Recently, home network systems comprising personal computers, facsimiles, set top boxes, and other electrical apparatuses connected via a local area network (LAN) have begun to spread in the home.

In such a home network system, internal state information indicating the state of the plurality of electrical apparatuses connected to the LAN is collected in the personal computer etc. The internal state information of the electrical apparatuses are information useful for determining preferences and other attributes and current behavior of each user of the home. Therefore, if the advertisement information can be provided to the user by using the internal state information, a high effect of the advertisement can be achieved.

However, since the internal state information relates to the privacy of the user, there is the disadvantage that if the internal state information is provided to the content provider, the privacy of the user will be invaded.

The disadvantage described above similarly exists in programs and other content information in addition to advertisement information.

### DISCLOUSURE OF THE INVENTION

The present invention was made in consideration of the above problem of the prior art and has as its object to provide an information processing method, apparatus, storage media and program for the same and a communication system capable of determining the usage form of the content at the content user side on the basis of both of the internal state of the content user side and a request of the content provider side while protecting the privacy of the content user side.

To achieve the object of the present invention described above, the information processing method of a first aspect of the invention comprises a first transmitting step for transmitting a usage form information defining a usage form of a content information on the basis of an internal state of a content user side from content provider side to the content user side; a second transmitting step for transmitting the content information from the content provider side to the content user side; an internal state information producing step for producing an internal state information indicating the internal state of the content user side at the content user side; and a usage form determining step for determining a usage form of the content information at the content user side on the basis of the internal state information and the usage form information.

Further, in the information processing method of the first aspect of the invention, preferably, the usage form determining step comprises a matching usage form information producing step for producing a matching usage form information matching the internal state of the content user side using the internal state information and the usage form information, and a content information acquiring step for acquiring the content information on the basis of the matching usage form information.

Further, in the information processing method of the first aspect of the invention, preferably, the usage form determining step comprises a step for selecting and acquiring a predetermined content information matching the internal state among a plurality of content information received from the content provider side.

Further, in the information processing method of the first aspect of the invention, preferably, the internal state information indicates an operation state of an electrical apparatus positioned at the content user side and / or an environment in which the electrical apparatus is positioned.

Further, in the information processing method of the first aspect of the invention, preferably, the content user side comprise a first electrical apparatus and a second electrical apparatus, the internal state information producing step further comprising a step for acquiring and managing by the first electrical apparatus an internal state information of the second electrical apparatus, the usage form determining step further comprising a usage form managing step for producing and managing a matching usage form information of the content information matching the internal state of the second electrical apparatus on the basis of the internal information acquired by the first electrical apparatus from the second electrical apparatus and the usage form information.

An information processing apparatus of a second aspect of the invention is positioned at a content user side and comprises a usage form information acquiring means for acquiring a usage form information defining a usage form of content information on the basis of an internal state information of the content user side; an internal state information acquiring means for acquiring and managing the internal state information; and a usage form determining means for determining a usage form of the content information on the basis of the internal state information and the usage form information.

An information processing method of a third aspect of the invention is performed at a content user side and comprises a usage form information acquiring step for acquiring a usage form information defining a usage form of content information on the basis of an internal state information of the content user side; an internal state information acquiring step for acquiring and managing the internal state information; and a usage form determining step for determining a usage form of the content information on the basis of the internal state information and the usage form information.

A storage media of a fourth aspect of the present invention stores a program capable of being read by a computer at a content user side, characterized in that the program comprises a usage information acquiring procedure for acquiring a usage form information defining a usage form of content information on the basis of an internal state information of the content user side; an internal state acquiring and managing procedure for acquiring and managing the internal state information; and a usage form determining procedure for determining a usage form of the content information on the basis of the internal state information and the usage form information.

A program of a fifth aspect of the present invention is a program capable of being read by a computer at a content user side, characterized in that the program comprises a usage information acquiring procedure for acquiring a usage form information defining a usage form of content information on the basis of an internal state information of the content user side; an internal state acquiring and managing procedure for acquiring and managing the internal state information; and a usage form determining procedure for determining a usage form of the content information on the basis of the internal state information and the usage form information.

An information processing apparatus of a sixth aspect of the present invention comprises a usage form information acquiring means for acquiring from a storage media a usage form information defining a usage form of an application program stored in the storage media; an internal state information producing means for producing an internal state information indicating an internal state of the information processing apparatus; and a reading means for reading a matching application program from the storage media on the basis of the acquired usage form information and the produced internal state information.

### BRIEF DESCRIPTION OF THE DRAWINGS

Figure 1 is a view of the overall configuration of a communication system of an embodiment of the present invention.
Figure 2 is a functional block diagram of electrical apparatuses shown in Fig. 1.
Figure 3 is a view for explaining communication between the electrical apparatuses shown in Fig. 1 via the home network.
Figure 4 is a view for explaining communication between the electrical apparatus shown in Fig. 1 and an electrical apparatus not having a home network processing function via the home network.
Figure 5 is a configuration view of a hardware of the set top box 15 shown in Fig. 1.
Figure 6 is a functional block diagram of the set top box shown in Fig. 1.
Figure 7 is a view for explaining a home network control function of the electrical apparatus shown in Fig. 1.
Figure 8 is a flow chart for explaining an example of the operation of the communication system shown in Fig. 1.
Figure 9 is a flow chart for explaining an example of the operation of the communication system shown in Fig. 1.
Figure 10 is a view showing elements of the usage form information UFI_1 by the XSLT format.
Figure 11 is a view showing the elements shown in Fig. 10 in the form of a tree structure.
Figure 12 is a view for explaining the state of the database of the usage form information UFI_1 before adding the usage form information UFI 1 at step ST4 shown in Fig. 8.
Figure 13 is a view showing the state shown in Fig. 12 in the form of a tree structure.
Figure 14 is a view for explaining the state in the database of the usage form information UFI_{―}1 after adding the usage form information UFI_{―}1 at step ST4 shown in Fig. 8.
Figure 15 is a view showing the state shown in Fig. 14 in the form of a tree structure.
Figure 16 is a view showing the state shown in Fig. 14 in the form of a tree structure.
Figure 17 is a view showing the DTD information of the internal state information ISI (Internal State Information) by the XML format of the account information produced at step ST5 shown in Fig. 9 in the server apparatus shown in Fig. 1.
Figure 18 is a view showing the entity information of the internal state information ISI.
Figure 19 is a view showing the elements in the entity information shown in Fig. 18 in the form of a tree structure.
Figure 20 is a view for explaining the elements in the usage form information UFI_2 of the XSLT format produced at step ST8 shown in Fig. 9.
Figure 21 is a view showing the elements shown in Fig. 20 in the form of a tree structure.
Figure 22 is a view for explaining the state of the database of the usage form information UFI_2 before adding the usage form information UFI_2 at step ST9 shown in Fig. 9.
Figure 23 is a view showing the state shown in Fig. 22 in the form of a tree structure.
Figure 24 is a view showing the state of the database of the usage form information UFI 2 after the usage form information UFI_2 at step ST9 shown in Fig. 3 is added.
Figure 25 is a view showing the DTD information of the content information of the XML format transmitted from the content provider apparatus to the set top box at step ST10 shown in Fig. 9.
Figure 26 is a view showing the entity information of the content information.
Figure 27 is a view showing the entity information of the content information.
Figure 28 is a view for explaining the output content information for output in the XML format.
Figure 29 is a view of the overall configuration of a communication system of another embodiment of the present invention.

### BEST MODE FOR CARRING OUT THE INVENTION

The preferable embodiments of the present invention will be described referring to attached drawings.

Below, an explanation will be made of a communication system according to an embodiment of the present invention.

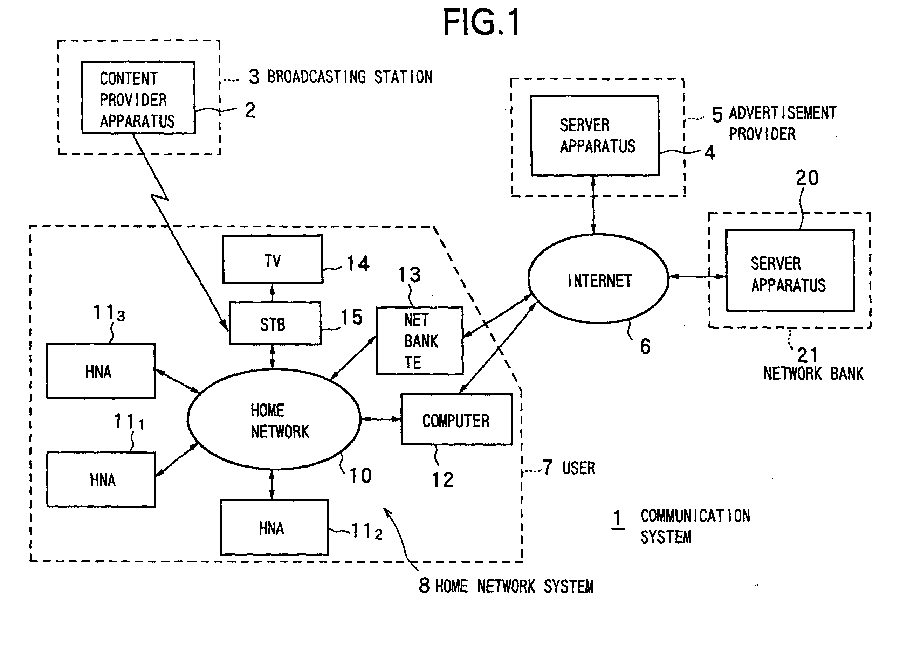

Figure 1 is a view of the overall configuration of a communication system 1 of the present invention.

As shown in Fig. 1, the communication system 1 comprises a content provider apparatus 2 used by a broadcasting station 3, a server apparatus 4 used by an advertisement provider 5, a home network system 8 used by a user 7, and a server apparatus 20 used by a network bank 21.

As shown in Fig. 1, the home network system 8 is located in a residence of the user 7 and comprises electrical apparatuses 11_1, 11_2, and 11_3, a computer 12, a network bank terminal 13, and a set top box (STB) 15 connected via a home network 10.

The server apparatus 4, the computer 12, the network bank terminal 13, and the server apparatus 20 are connected to the Internet 6 or another communication network.

In the present embodiment, the content provider apparatus 2 and the server apparatus 4 correspond to the content provider side of the present invention, while the home network system 8 corresponds to the content user side of the present invention.

Further, the set top box 15 corresponds to the information processing apparatus of the present invention.

Below, each component of the communication system 1 will be explained.

### [Content Provider Apparatus 2]

The content provider apparatus 2 produces content information of a television program and an advertisement and broadcasts the content information by a wireless system or a wired system.

Note that the content information of the advertisement can be produced by the advertisement provider 5 and provided from the advertisement provider 5 to the broadcasting station 3.

The broadcasted program content information and advertisement content information are received by the set top box 15 of the home network system 8 shown in Fig. 1.

In the present embodiment, the content information is described by using the extensible markup language (XML) and comprises document type definition (DTD) information defining elements and attributes included inside the content information and entity information of the content.

The usage form of the content information by the network system 8 is, as will be described later, decided according to the usage form information UFI_1 (usage form information of the present invention) provided from the server apparatus 4 to the set top box 15 and an internal state of each apparatus in the home network system 8.

The use of the content information in the home network system 8 is for example a screen display, audio output, etc.

### [Server Apparatus 4]

The server apparatus 4 produces the usage form information UFI 1 defining the form of use of the content information of the advertisement in the home network system 8 for each of a plurality of the internal state of the content user side and transmits the same to the computer 12 of the home network system 8 via the Internet 6.

The usage form information UFI_1 is used by the set top box 15 of the home network system 8 for deciding the usage form of the content information received from the content provider apparatus 2 according to the internal state of the home network system 8.

### [Server Apparatus 20]

The server apparatus 20 manages an account of the user 7 opened in the network bank 21 and transmits the account information as the internal state information ISI (internal state information of the present invention) to the network bank terminal 13 of the home network system 8 via the Internet 6 upon a request from the computer 12 or at a predetermined timing.

The account information is, as will be described later, used as the internal state information ISI indicating the internal state of the user 7 at the set top box 15.

### [Home Network System 8]

As described above, in the home network system 8, the electrical apparatuses 11_1, 11_2, and 11_3, the computer 12, the network bank terminal 13, and the set top box 15 are connected via the home network 10.

In the home network system 8, each apparatus connected to the home network system 10 transmits and shares the internal state information ISI indicating a current operation state of itself to the other apparatuses. Then, the set top box 15 stores the usage form information UFI_1 received from the server apparatus 4, dynamically produces (updates) the usage form information UFI_2 (matching usage form information of the present invention) from the stored usage form information UFI_1 when the internal state information ISI of each apparatus connected to the home network 10 is input, and stores the same in a database. Then, content information for output matching the current internal state of the home network system 8 is produced from the content information received from the content provider apparatus 2 using the usage form information UFI_2 stored in the database.

### Electrical Apparatuses 11_1/ 11_2, and 11_3:

The electrical apparatuses 11_1, 11_2, and 11 3 are for example a facsimile, printer, video camera, refrigerator, and other electrical apparatuses provided in the home.

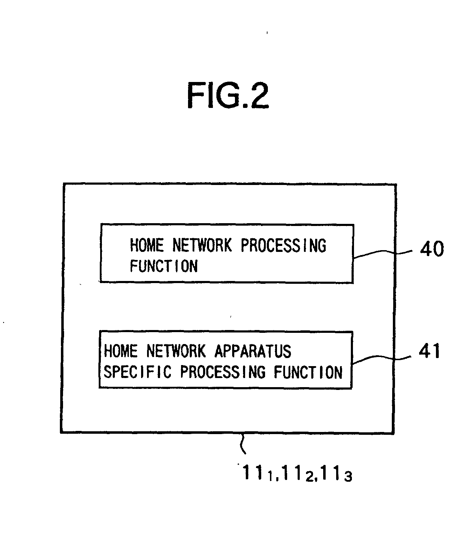

Figure 2 is a functional block diagram of the electrical apparatuses 11_1, 11_2, and 11 3.

As shown in Fig. 2, the electrical apparatuses 11_1, 11_2, and 11_3 comprise a home network processing function 40 and a home network apparatus specific processing function 41.

The home network processing function 40 controls the home network apparatus specific processing function 41 on the basis of meta data included in the notification NTF received from the set top box 15 via the home network 10 and provides necessary information to the home network apparatus specific processing function 41.

The home network apparatus specific processing function 41 performs processing specific to the electrical apparatus in cooperation with the home network apparatus specific processing function 41.

The specific processing is, for example, processing specific to a facsimile when the electrical apparatus is a facsimile and processing specific to a printer when the electrical apparatus is a printer.

The home network apparatus specific processing function 41 transmits the internal state information ISI indicating the information of the operation state of the electrical apparatus, an environment in which the electrical apparatus is located, etc. to the set top box 15 via the home network 10 according to the processing specific to the electrical apparatus.

The internal state information ISI is the information indicating the name of the material stored in the refrigerator, the power consumption of the refrigerator, the temperature inside and outside of the refrigerator, etc. when the corresponding electrical apparatus is a refrigerator.

In the present embodiment, the internal state information ISI is described by the XML format and comprises document type definition information defining an element and an attribute included in the internal state information and entity information indicating the state of the content user side.

Note that, the internal state information may be plug and play information. Plug and play information is the information that is broadcasted in the home network 10 when a device is connected. If a camera is connected to the home network 10, it will broadcast a message (as internal state information) containing information about its configuration. The information can then be used by usage form information to, for example, tailor commercials based on what devices are connected in the home network 10.

The electrical apparatuses 11_1, 11_2, and 11_3, if necessary, communicate with each other via the home network 10.

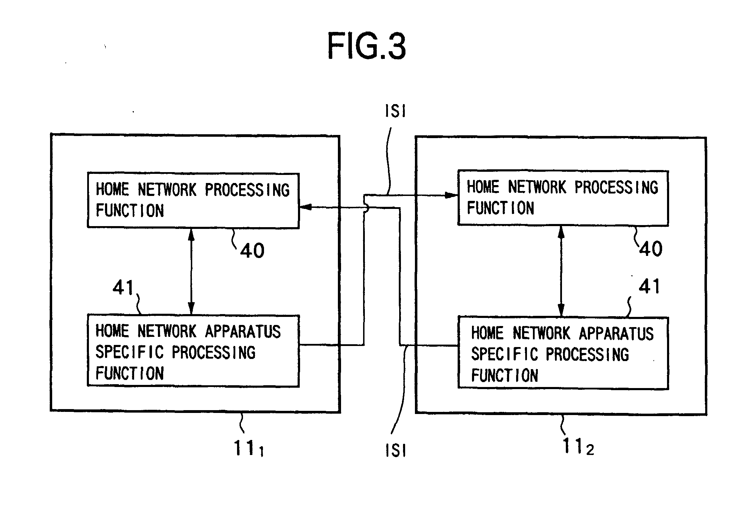

Figure 3 is a view for explaining communication between the electrical apparatuses 11_1 and 11_{―}2 shown in Fig. 1 via the home network 10.

As shown in Fig. 3, the home network apparatus specific processing function 41 of the electrical apparatus 11_1 transmits the internal state information ISI indicating the operation state of the electrical apparatus 11_1 to the electrical apparatus 11_2 via the home network 10. The internal state information ISI is used for the processing by the home network processing function 40 of the electrical apparatus 11_2.

Further the home network apparatus specific processing function 41 of the electrical apparatus 11 2 transmits the internal state information ISI indicating the operation state of the electrical apparatus 11_2 to the electrical apparatus 11_1 via the home network 10. The internal state information ISI is used for the processing by the home network processing function 40 of the electrical apparatus 11_1.

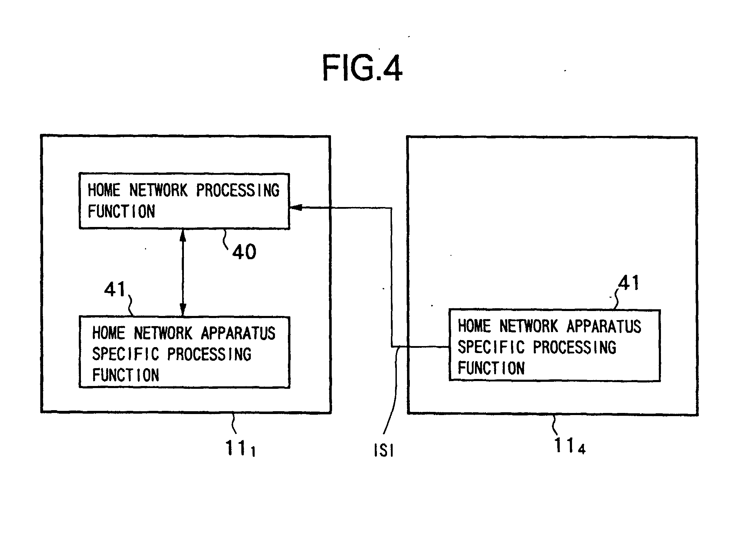

Figure 4 is a view for explaining the communication between the electrical apparatus 11_1 shown in Fig. 1 and an electrical apparatus 11_4 not having a home network processing function 40 via the home network 10.

As shown in Fig. 4, in the case that the electrical apparatus 11-4 is provided with the home network apparatus specific processing function 41 and not provided with the home network processing function 40, the electrical apparatus 11_1 receives the internal state information ISI of the electrical apparatus 11_4 from the home network apparatus specific processing function 41 of the electrical apparatus 11_4 via a transmission cable. Then the internal state information ISI is used for the processing of the home network processing function 40 of the electrical apparatus 11_1.

### Computer 12:

The computer 12 is for example a personal computer and communicates with the server apparatus 4 via the Internet 6.

The computer 12 is what is called a home gateway.

### Network Bank Terminal 13:

The network bank terminal 13 receives account information as the internal state information ISI via the Internet 6.

### Television Receiver 14:

A television receiver 14 displays a video on a screen according to a display signal input from the set top box 15.

### Set Top Box 15:

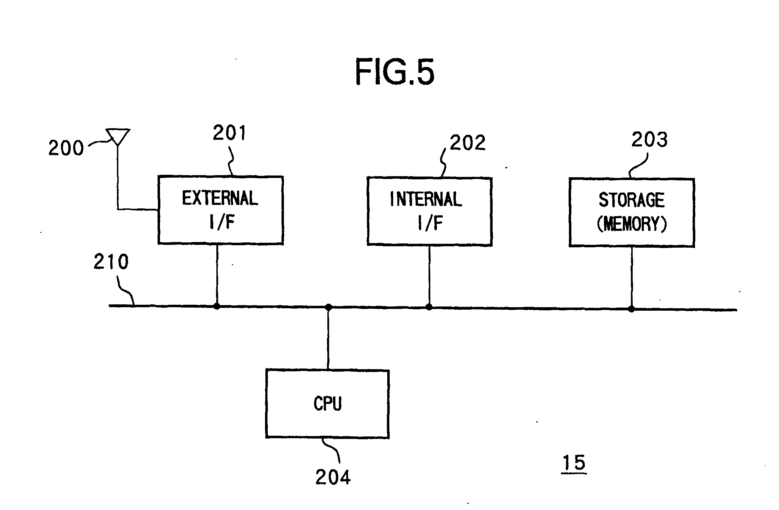

Figure 5 is a hardware configuration diagram of the set top box 15 shown in Fig. 1.

As shown in Fig. 5, the set top box 15 comprises for example an external interface circuit 201, an internal interface circuit 202, a memory 203 and central processing unit (CPU) connected to each other via a bus 210.

Each components shown in Fig.5 achieves each function explained below.

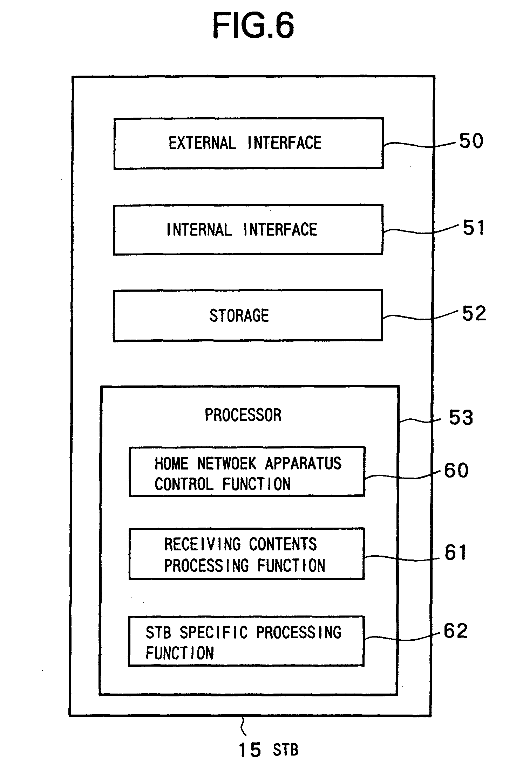

Figure 6 is a functional block diagram of the set top box 15 shown in Fig.1.

As shown in Fig.6, the set top box 15 comprises an external interface 50, an internal interface 51, a storage 52, and a processor 53.

Here the internal interface 51 corresponds to the internal state information acquiring means and the usage form information acquiring means of the present invention, and the processor 53 corresponds to the usage form determining means.

The external interface 50 is realized by using the external interface circuit 201 shown in Fig.6, and the external interface 50 is an interface for receiving content information from the content provider apparatus 2 by means of an antenna 200 shown in Fig. 6.

The internal interface 51 is realized by using the internal interface circuit 202 shown in Fig. 6, and the internal interface 51 is an interface for communicating with the server apparatus 4 and the server apparatus 20 via the Internet 6.

The storage 52 is realized by using the memory 203 shown in Fig.6 and is a database for storing the usage form information UFI_1 received from the server 4 and a database for storing the usage form information UFI_2 produced by the processor 53 as will be described later.

The usage form information UFI_1 and UFI_2 are for example files and other modules.

The usage form information UFI_1 and UFI_2 are stored in the database in the storage 52 in the form of a DOM structure of the XML. The database is updated when new usage form information UFI_1 is received or when new internal state information ISI is received.

The processor 53 is realized by using the CPU 204 shown in Fig.6 and the processor 53 is, as shown in Fig. 6, comprises a home network apparatus control function 60, a received content processing function 61, and a STB specific processing function 62.

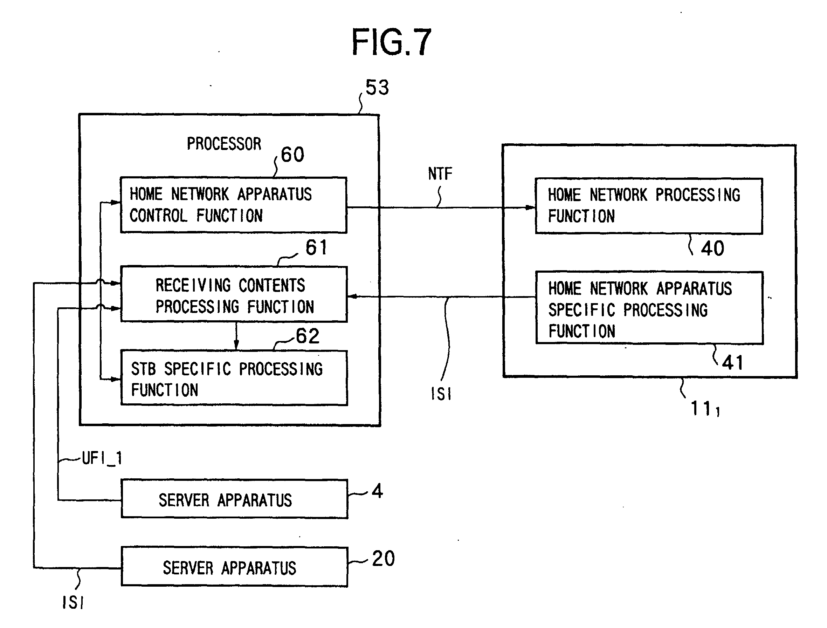

The home network apparatus control function 60, as shown in Fig. 7, inputs and outputs necessary information with the STB specific processing function 62 to produce the notification NTF and transmits the same to the electrical apparatuses 11_1, 11_2, and 11_3 via the home network 10.

The received content processing function 61, as shown in Fig. 7, converts the content information received from the content provider apparatus 2 to match the current internal state of the home network system 8 using the usage form information UFI_1 received from the server apparatus 4 and the internal state information ISI received from the server apparatus 20 and electrical apparatuses 11_1, 11_2, and 11_3.

The STB specific processing function 62 performs processing specific as a set top box.

Below, an example of the operation of the communication system 1 will be explained.

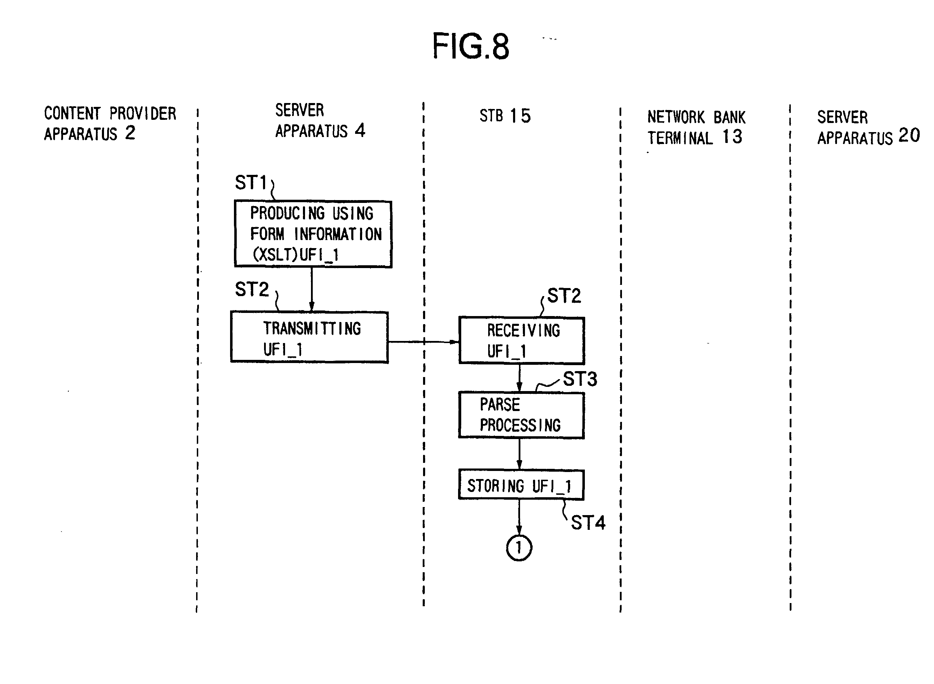

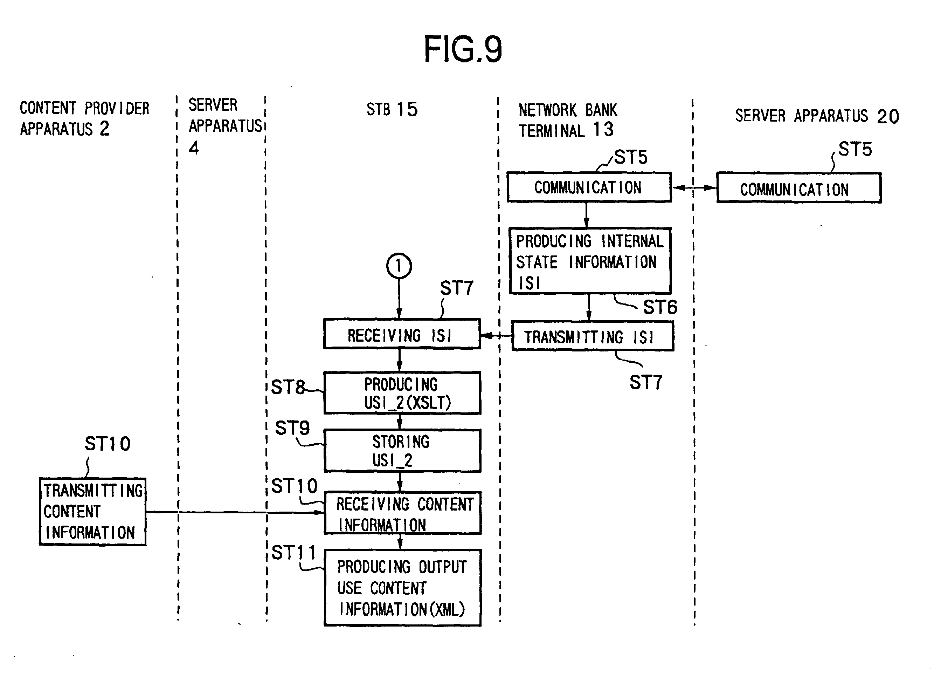

Figure 8 and Fig. 9 are flow charts for explaining an example of the operation of the communication system 1.

### Step ST1:

For example, when the advertisement content information is broadcasted from the broadcasting station 3, usage form information UF 1 defining a usage form of content information of an advertisement for each of a plurality of internal state of the home network system 8 of the content user side is produced by the extensible stylesheet transformation (XSLT) format at the server apparatus 4.

The usage form information UFI_1 indicates a routine for transforming the content information received by the set top box 15 from the content provider apparatus 2 into a form actually used and comprises a plurality of elements arranged in a tree structure.

For example, as one example, the usage form information UFI_1 indicates to display an advertisement of a car A when the increase of the amount of a user's bank account is equal to or greater than 9 million yen and the increase rate is equal to or greater than 50%, display an advertisement of a car B when the balance of the user's bank account is equal to or greater than 10 million yen, and display the advertisement of a car C when the balance of the user's bank account is less than 10 million yen.

### Step ST2:

The usage form information UFI_1 produced at step ST1 is transmitted from the content provider apparatus 4 and received by the internal interface 51 of the set top box 15 shown in Fig. 6. via the Internet 6, computer 12 and the network 10.

### Step ST3:

The usage form information UFI_1 received at step ST2 is analyzed according to a document object model (DOM) by the received content processing function 61 of the set top box 15 shown in Fig. 6 and the necessary information is extracted. That is, parse processing is performed.

### Step ST4:

The usage form information UFI_1 parse processed by the received content processing function 61 is added to the database of the usage form information UFI_1 in the storage 52.

### Step ST5:

The network bank terminal 13 communicates with the server apparatus 20 and receives the information indicating that, for example, the funds of the user 7 in the bank account has increased by 9.5 million yen due to winning the lottery and the balance has become 17.3 million yen.

### Step ST6:

The network bank terminal 13 produces the internal state information ISI indicating an amount of increase of funds, a rate of increase, and a balance indicated by the bank account of the user 7 in the XML format by using the information obtained in the step ST5.

### Step ST7:

The internal state information ISI produced in the step ST6 is transmitted from the network bank terminal 13 to the STB 15 via the home network 10.

The internal state information ISI is received by the internal interface 51 of the set top box 15 shown in Fig. 6.

### Step ST8:

The usage form information UFI_2 matching the internal state of the user 7 is produced by using the usage form information UFI_1 stored in the storage 52 at step ST4 and the internal state information ISI received at step ST7 by the received content processing function 61 of the processor 53 of the set top box 15 shown in Fig. 6.

### Step ST9:

The usage form information UFI_2 produced at step ST8 is added to the database of the usage form information UFI_2 in the storage 52.

### Step ST10:

The content provider apparatus 2 produces the content information of the program and the advertisement in the XML format, and the content information is broadcast by a wireless system or wired system.

The content information is received by the external interface 50 of the set top box 15 shown in Fig. 6.

The content information is for example content information of the advertisement of the car A, car B, and car C.

### Step ST11:

The content information received at step ST9 is converted into content information for output using the usage form information UFI_2 produced at step ST8 by the received content processing function 61 of the processor 53 of the set top box 15 shown in Fig. 6. The output content information is described in the XML format.

At this time, the condition (a) of step ST1 is satisfied, therefore the advertisement of the car A is selected as an advertisement in the output content information. Therefore, the television receiver 14 outputs the video and audio of the program and video and audio of the advertisement of the car A.

Below, an explanation will be made of the information described by the XSLT format and XML format used by the processing shown in Fig. 8 and Fig. 9 by using the above advertisement of the car described above as an example.

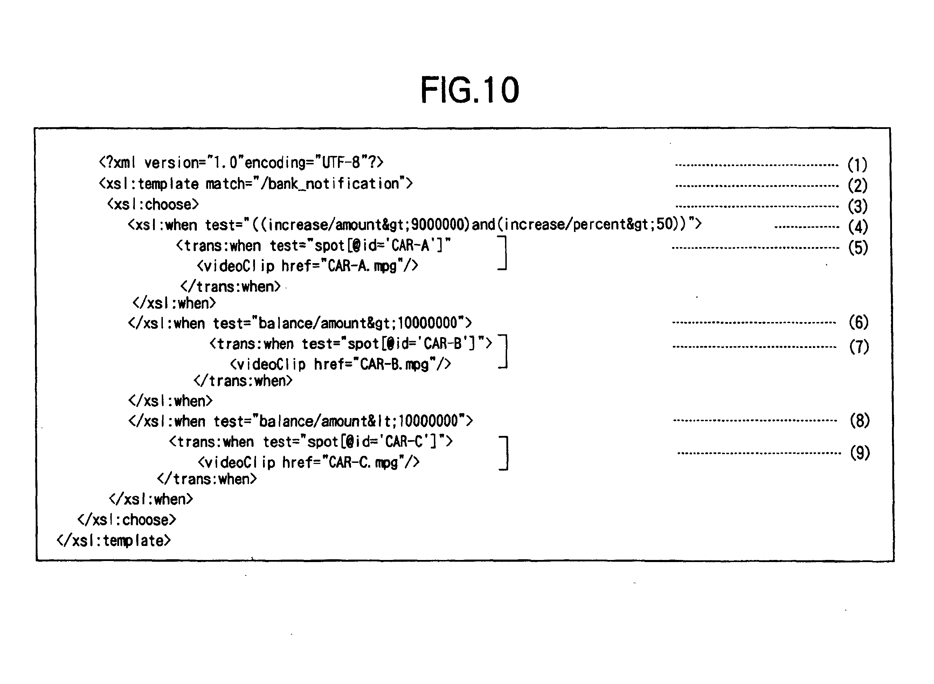

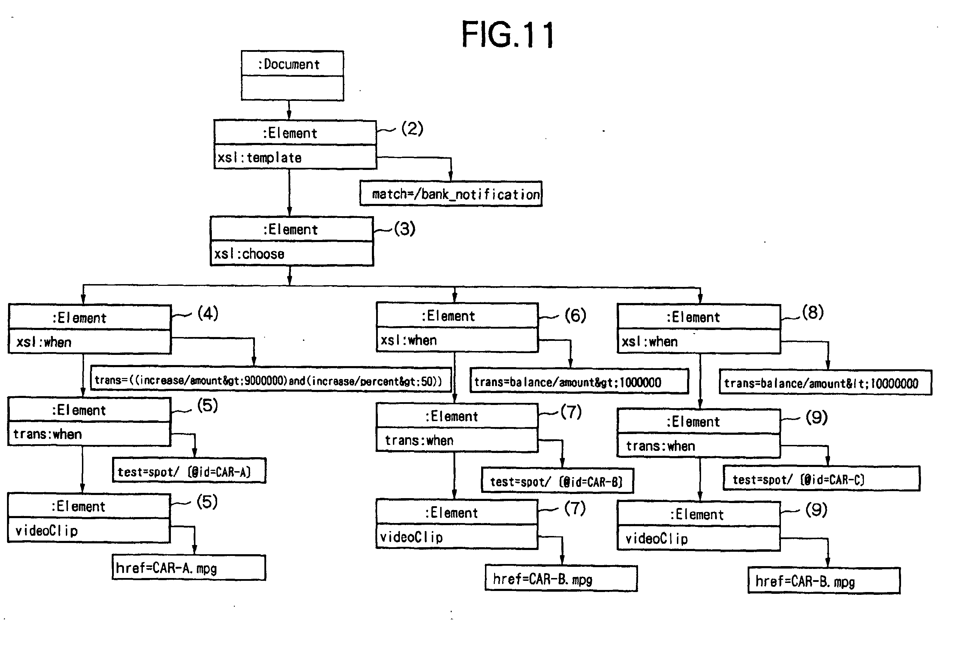

Figure 10 is a view showing elements of the usage form information UFI_1 of the XSLT format, while Figure 11 is a view showing the elements shown in Fig. 10 in the form of a tree structure.

The element (1) is an XML declaration. It is an element for defining specifications of an XML document (content information in this embodiment) to be converted by using the usage form information UFI 1.

The element (2) indicates to apply a template in the usage form information UFI_1 to an element "bank_notification" in the XML document to be converted.

The element (3) is an element indicating a conditional branch.

The element (4) is an element for judging whether or not the condition that the increase of the funds in a user's bank account is equal to or greater than 9 million yen and the rate of increase is equal to or greater than 50 % is satisfied by the internal state information ISI produced by the network bank apparatus 13.

The element (5) is processing selected when a judgment that the condition is satisfied has been made at the element (4). The element (5) indicates to output an advertisement of the car A by video.

The element (6) is an element for judging whether or not the condition that the increase of the funds in a user's bank account is equal to or greater than 10 million yen is satisfied by the internal state information ISI received from the server apparatus 20.

The element (7) is processing selected when the judgment that the condition is satisfied has been made at the element (6). The element (7) indicates to output an advertisement of the car B by video.

The element (8) is an element for judging whether or not the condition that the balance of the funds in a user's bank account is less than 10 million yen is satisfied by the internal state information ISI received from the server apparatus 20.

The element (9) is processing selected when a judgment that the condition is satisfied has been made at the element (8). The element (9) indicates to output an advertisement of the car C by video.

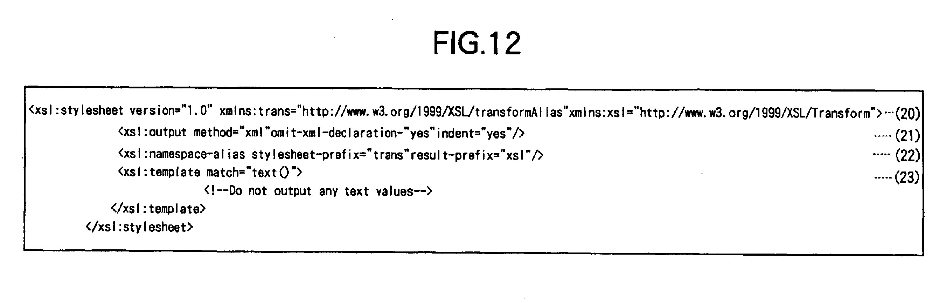

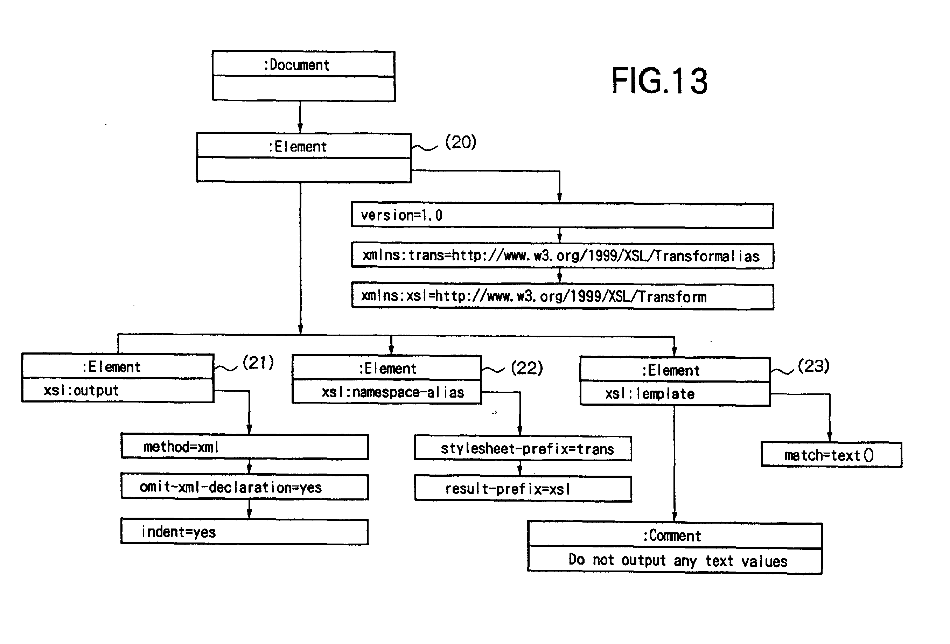

Figure 12 is a view for explaining the state of the database of the usage form information UFI_1 before adding the usage form information UFI_1 at step ST4 shown in Fig. 8. Figure 13 is a view showing the state shown in Fig. 12 by a tree structure.

As shown in Fig. 12 and Fig. 13, before the usage form information UFI_1 shown in Fig. 10 and Fig. 11 is added, an element "xsl: output", an element "xsl:namespace-alias", and an element "xsl:template" are included in the database of the usage form information UFI_1 while using an element "xsl:stylesheet" as a root.

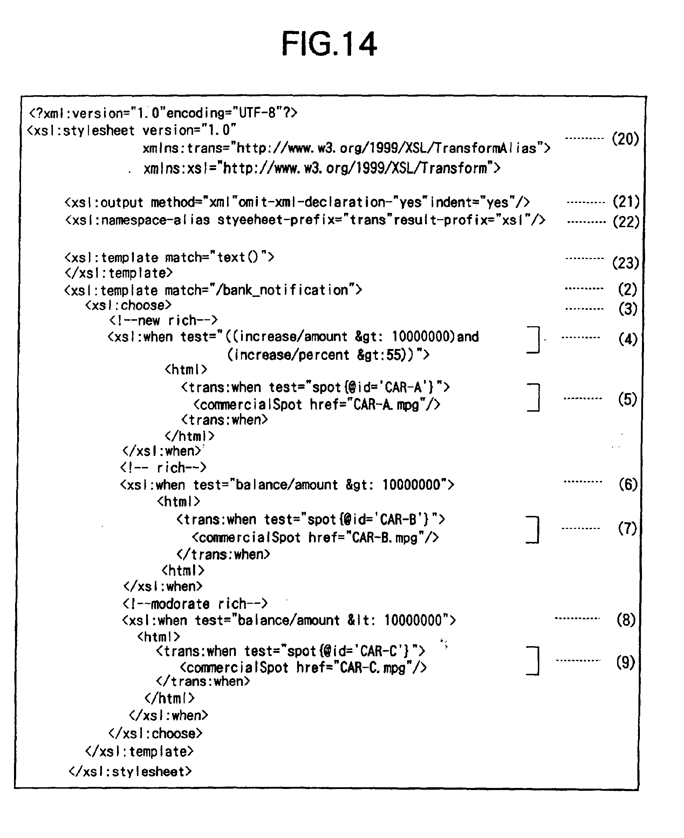

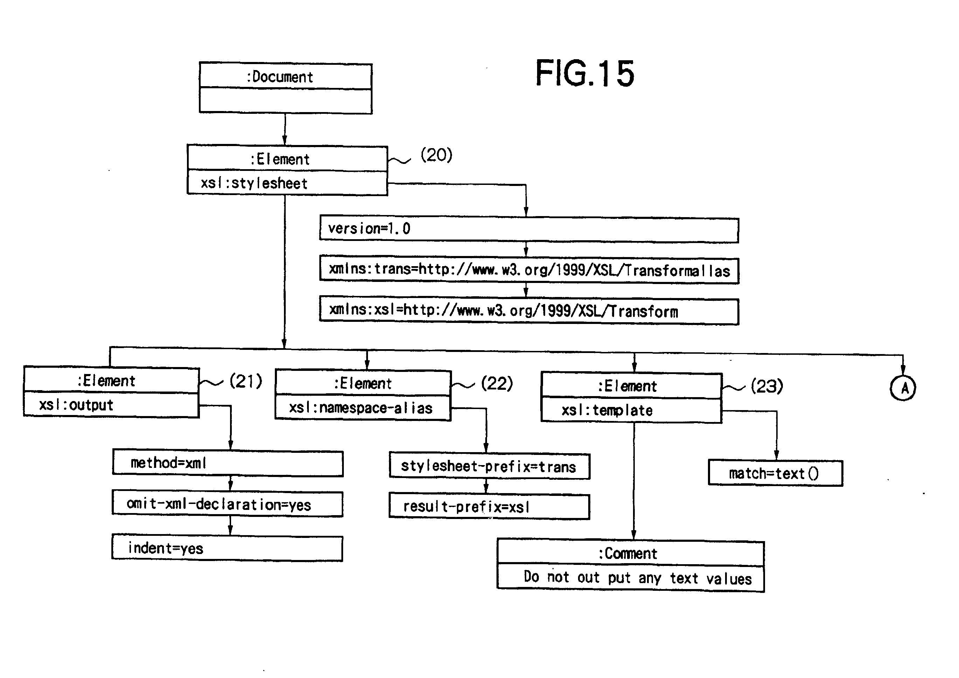

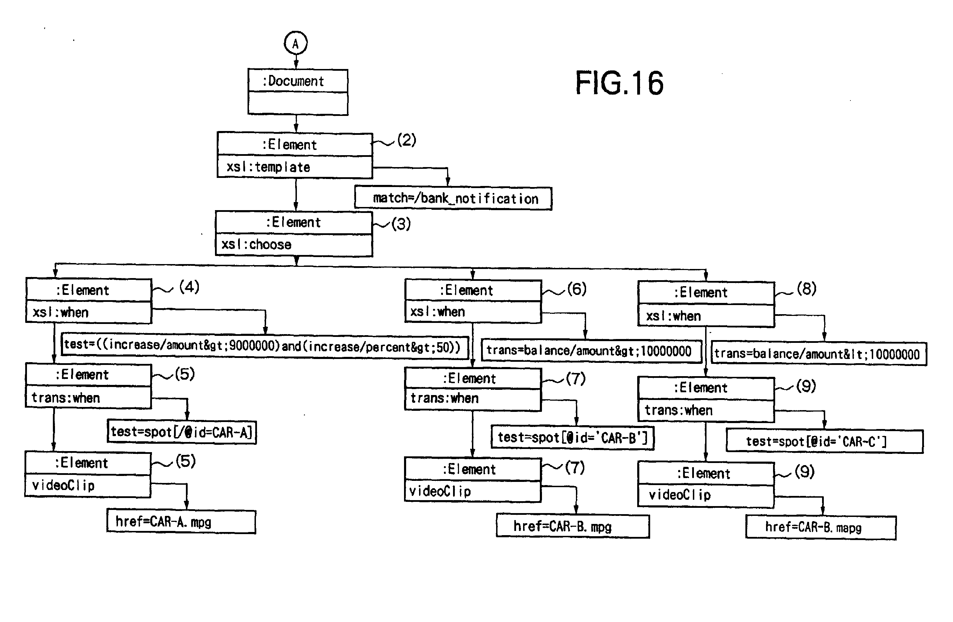

Figure 14 is a view for explaining the state in the database of the usage form information UFI_1 after adding the usage form information UFI_1 at step ST4 shown in Fig. 8. Figure 15 and Figure 16 is a view showing the state shown in Fig. 14 in the form of a tree structure.

As shown in Fig. 14, Fig. 15, and Fig. 16, the database of the usage form information UFI_1 enters a state where the tree structure shown in Fig. 10 and Fig. 11 is added to the tree structure shown in Fig. 12 and Fig. 13 after performing the process of step ST4.

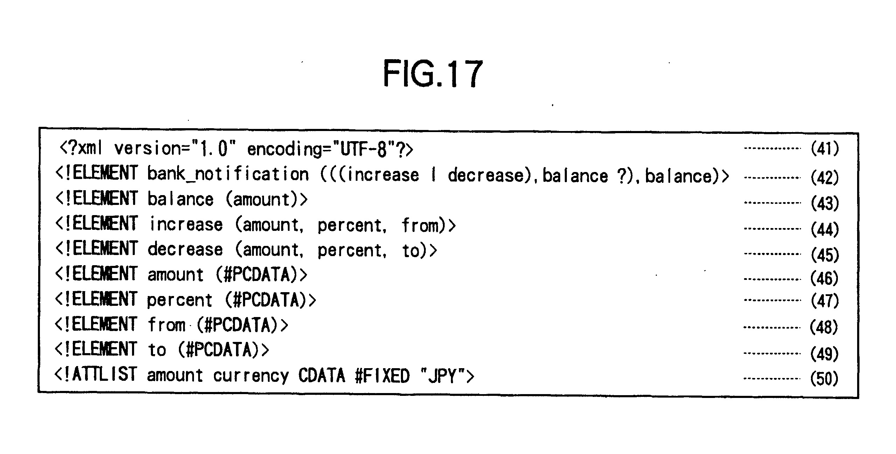

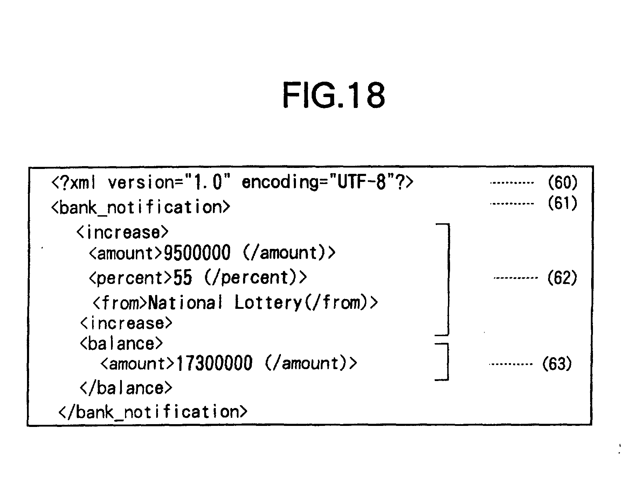

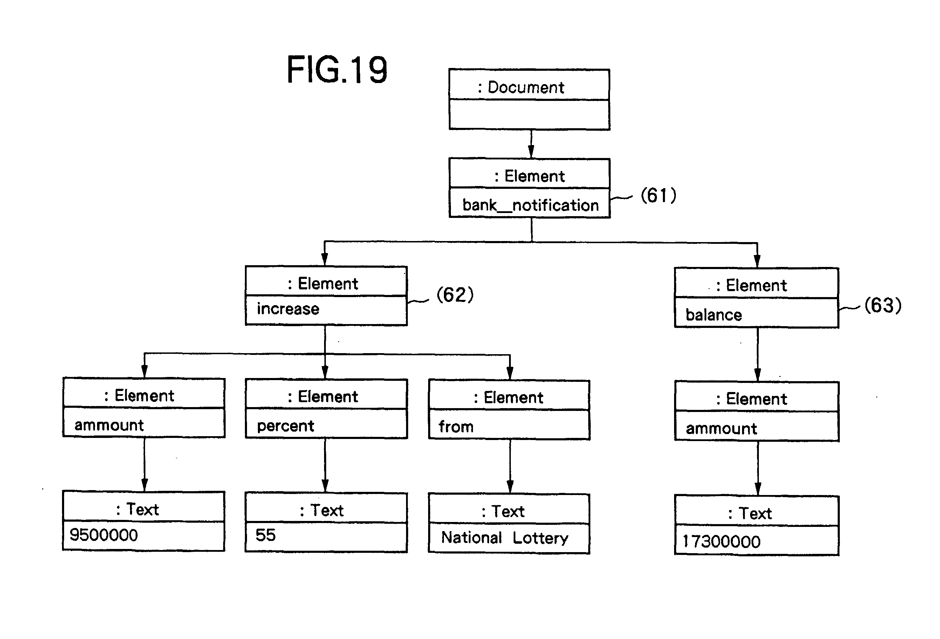

Figure 17 is a view showing the DTD information of the internal state information ISI by the XML format of the account information produced at step ST5 shown in Fig. 9 in the server apparatus 20. Figure 18 is a view showing the entity information of the internal state information ISI. Figure 19 is a view showing the elements in the entity information shown in Fig. 18 in the form of a tree structure.

First, an explanation of the DTD information of the internal state information ISI shown in Fig. 17 will be made.
(41) is an XML declaration.
(42) is an element-type declaration defining the type of an element "bank notification".
(43) is an element-type declaration defining the type of an element "balance".
(44) is an element type declaration defining the type of an element "increase".
(45) is an element type declaration defining the type of an element "decrease ".
(46) is an element type declaration defining the type of an element "amount ".
(47) is an element type declaration defining the type of an element "percent".
(48) is an element type declaration defining the type of an element "from".
(49) is an element type declaration defining the type of an element "to".
(50) is an attribute list declaration defining the type of an element "currency" belonging to the element "amount".

Fig. 19 is a view showing the state shown in Fig.18 in the form of a tree structure.

Next, entity information of the internal state information ISI shown in Fig. 18 and Fig. 19 will be explained.
(60) is an XML declaration.
(61) is a root element "bank notification".
(62) is an element "increase" belonging to the root element "bank notification" and indicates that the user' bank account has increased by 9.5 million yen due to winning the lottery-and the rate of increase is 55%.
(63) is an element "balance" belonging to the root element "bank notification" and indicates that the balance is 17.3 million yen.

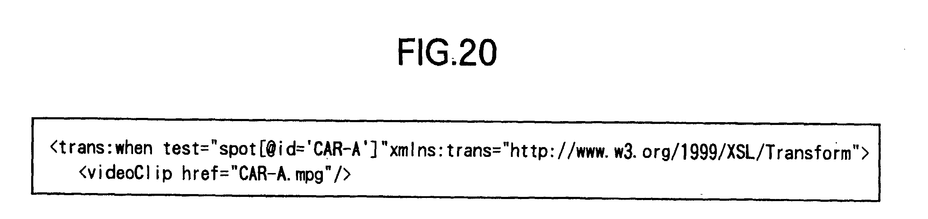

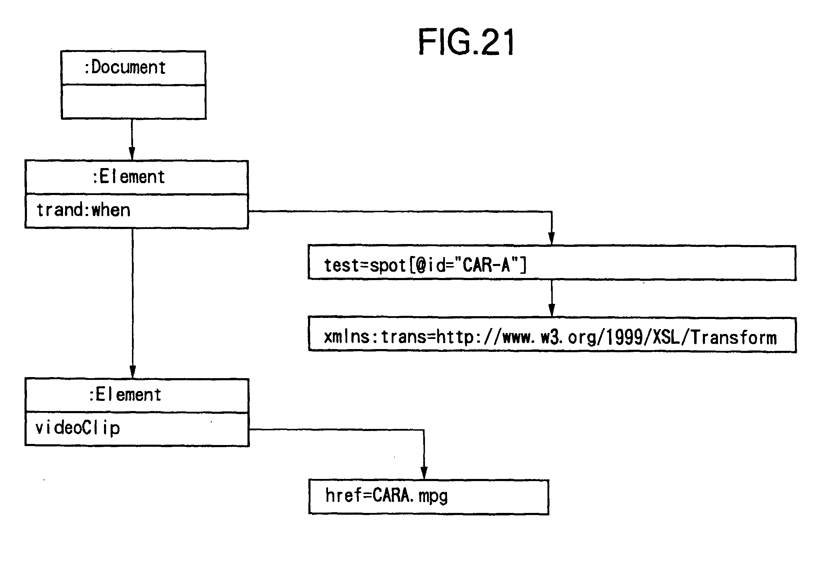

Figure 20 is a view for explaining the elements in the usage form information IJDI 2 of the XSLT format produced at step ST8 shown in Fig. 9. Figure 21 is a view showing the elements shown in Fig. 20 in the form of a tree structure.

In this example, since the condition of the element (4) of the usage form information UFI_1 shown in Fig. 10 and Fig. 11 is satisfied at step ST8 shown in Fig. 9, as shown in Fig. 20 and Fig. 21, the usage form information UFI_2 including the element (5) indicating to output an advertisement of the car A by video is produced.

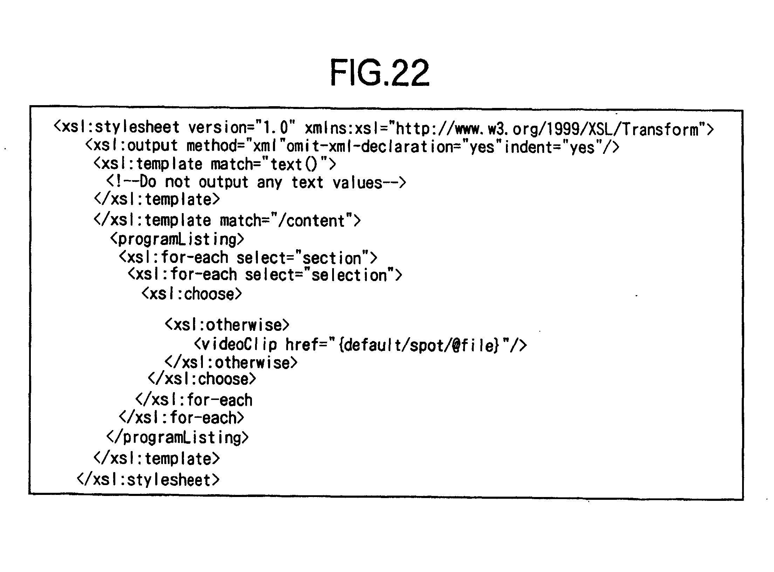

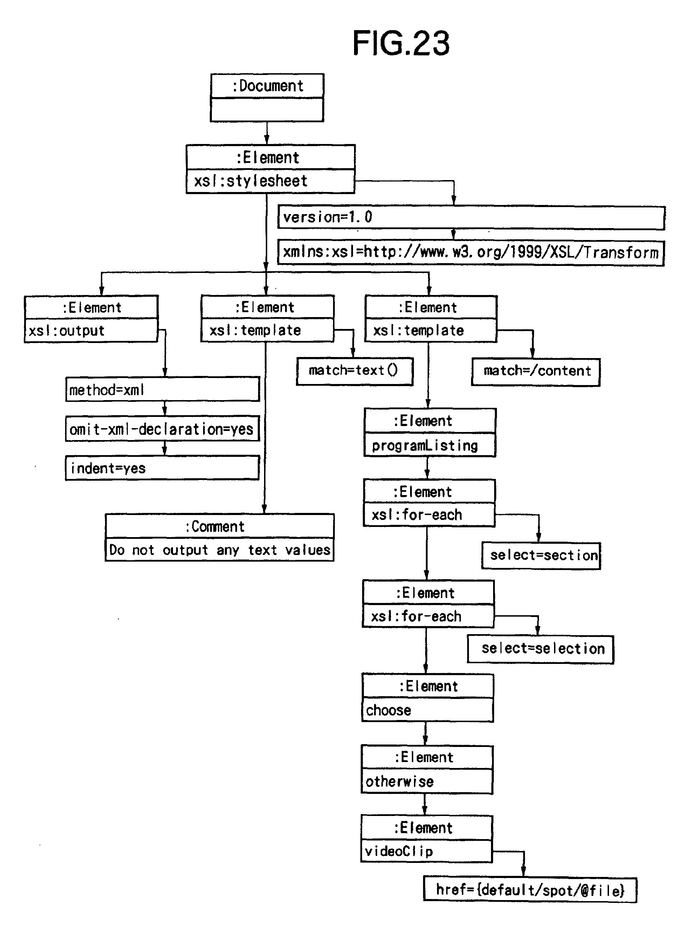

Figure 22 is a view for explaining the state of the database of the usage form information UFI_2 before adding the usage form information UFI_2 at step ST9 shown. in Fig. 9. Figure 23 is a view showing the state shown in Fig. 22 in the form of a tree structure.

As shown in Fig. 22 and Fig. 23, before the usage form information UFI_2 shown in Fig. 22 and Fig. 23 is added, an element "xsl:output", an element "xsl:template" relating to text, and an element "xsl:template" relating to content are included in the database of the usage form information UFI_2 while using an element "xsl:stylesheet" as a root.

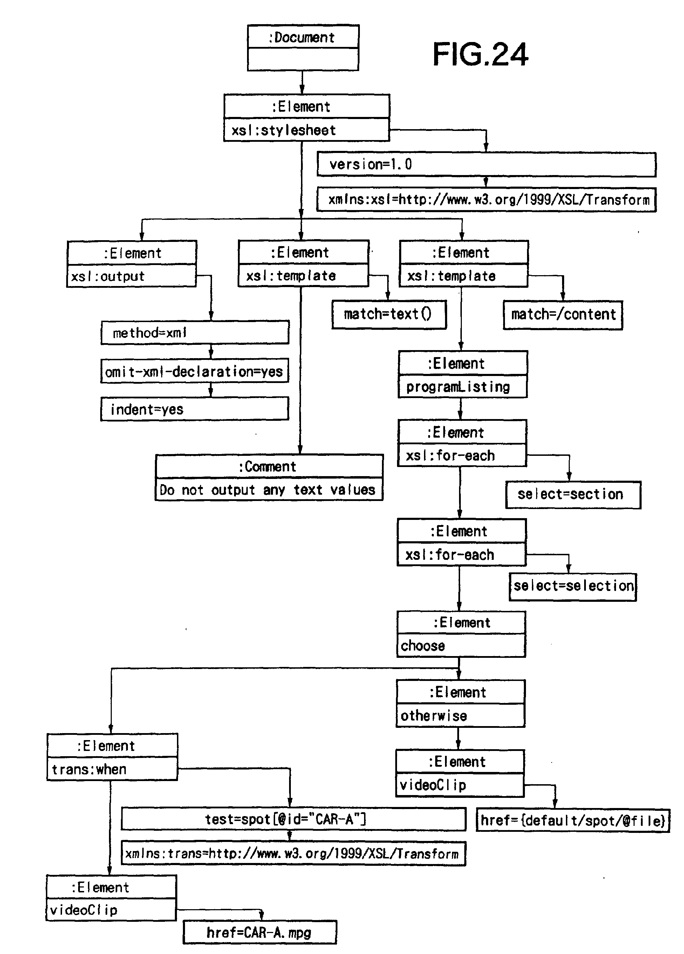

Figure 24 is a view showing the state of the database of the usage form information UFI_2 after the usage form information UFI_2 at step ST9 shown in Fig. 9 is added in the form of a tree structure.

As shown in Fig. 23, the database of the usage form information UFI_2 enters a state in which the tree structure of the usage form information UFI_2 shown in Fig. 21 has been added to the tree structure shown in Fig. 23.

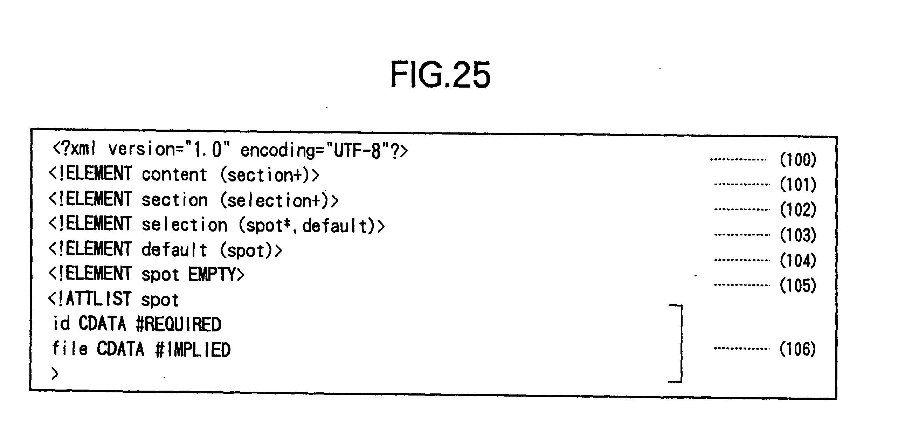

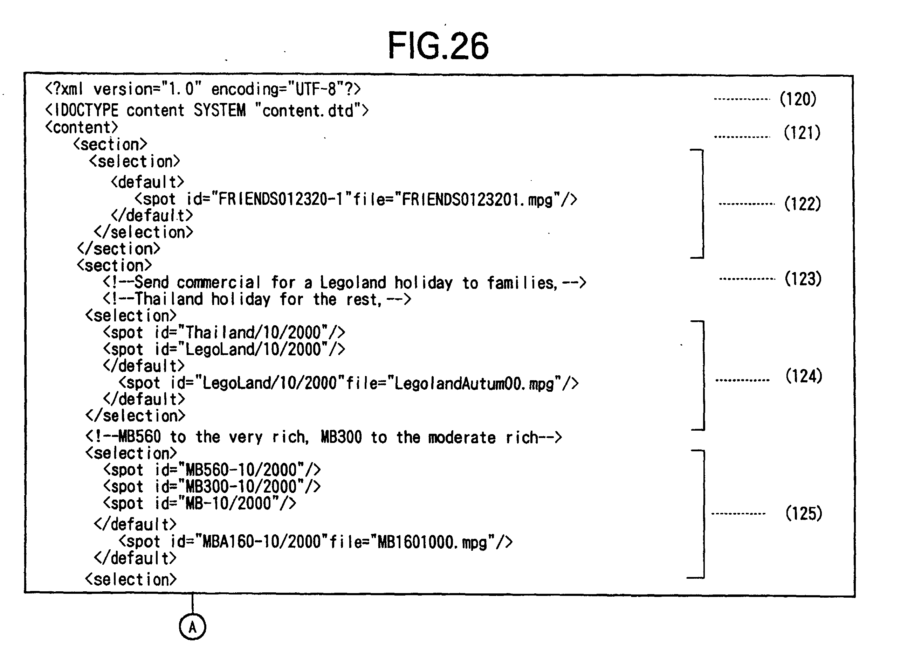

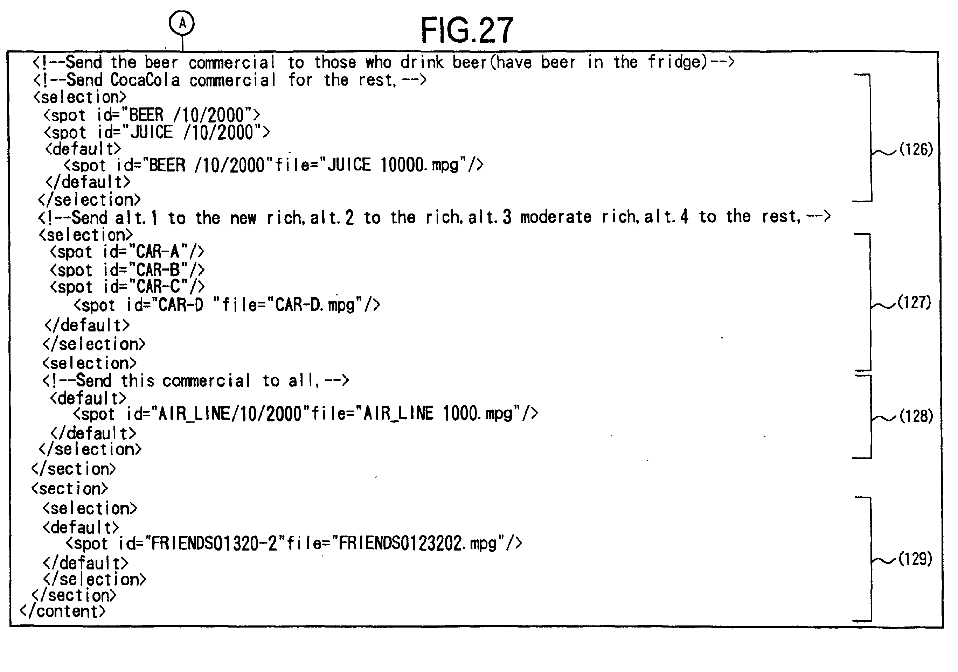

Figure 25 is a view showing the DTD information of the content information of the XML format transmitted from the content provider apparatus 2 to the set top box 15 at step ST18 shown in Fig. 9. Figure 26 and Figure 27 are views showing the entity information of the content information.

First, the DTD information of the content information shown in Fig. 25 will be explained.
(100) is an XML declaration.
(101) is an element type declaration defining the type of an element "content".
(102) is an element type declaration defining the type of an element "section".
(103) is an element type declaration defining the type of an element "selection".
(104) is an element type declaration defining the type of an element "default".
(105) is an element type declaration defining the type of an element "spot".
(106) is an attribute list declaration defining the type of an element "id" and "file" belonging to the element "spot".

Next, the entity information of the content information shown in Fig. 26 and Fig. 27 will be explained.
(120) is an XML declaration.
(121) is a root element "content".
(122) is an element "program" relating to a program.
(123) is an element "comSpots" relating to an advertisement.
(124) is for example an element "selection" of an advertisement relating to travel included in the element "comSpots".
(125) is for example an element "selection" of an advertisement relating to MB and MBA included in the element "comSpots".
(126) is for example an element "selection" of an advertisement relating to a beverage included in the element "ComSpots".
(127) is for example an element "selection" of an advertisement relating to a car included in the element "comSpots".
   An advertisement relating to the car A, car B, and car C mentioned before and an advertisement relating to a car D serving as a default are included in the element "selection" of the advertisement relating to the car.
(128) is for example an element "selection" of an advertisement relating to an airline included in the element "comSpots".
(129) is an element "program" relating to a program.

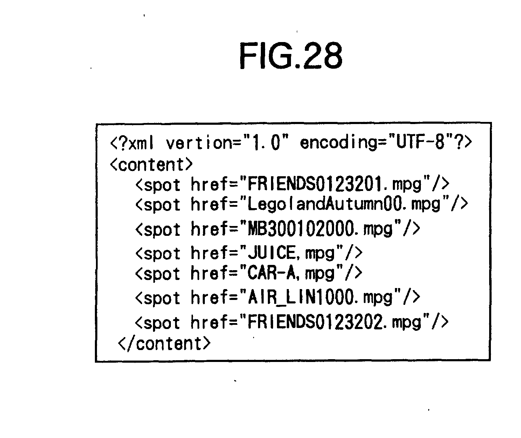

Figure 28 is a view for explaining the output content information in the form of XML.

For example the output content information shown in Fig. 28 is produced at step ST10 shown in Fig. 9.

In this output content information, the element (140) of the advertisement of the car A is included in the element "content".

As described above, according to the communication system 1, the usage form of the content in the home network system 8 can be determined to conform to information relating to the privacy of the user 7 without providing information relating to privacy to the content provider apparatus 2.

Further, according to the communication system 1, the usage form of advertisement information in the home network system 8 can be made to conform to the intention of the advertisement provider 5 by providing the usage form information from the server apparatus 4 to the home network system 8.

Further, according to the communication system 1, when the internal state of the user has changed, the change can be immediately reflected to the usage form of the content information.

The embodiment described above is an example of the present invention. The present invention is not limited to the above embodiment.

For example, in the embodiment described above, the case of determining the usage form of the content information of the advertisement by the usage form information and the internal state information was illustrated, but in the present invention, the usage form of the program or other content information can be determined by them.

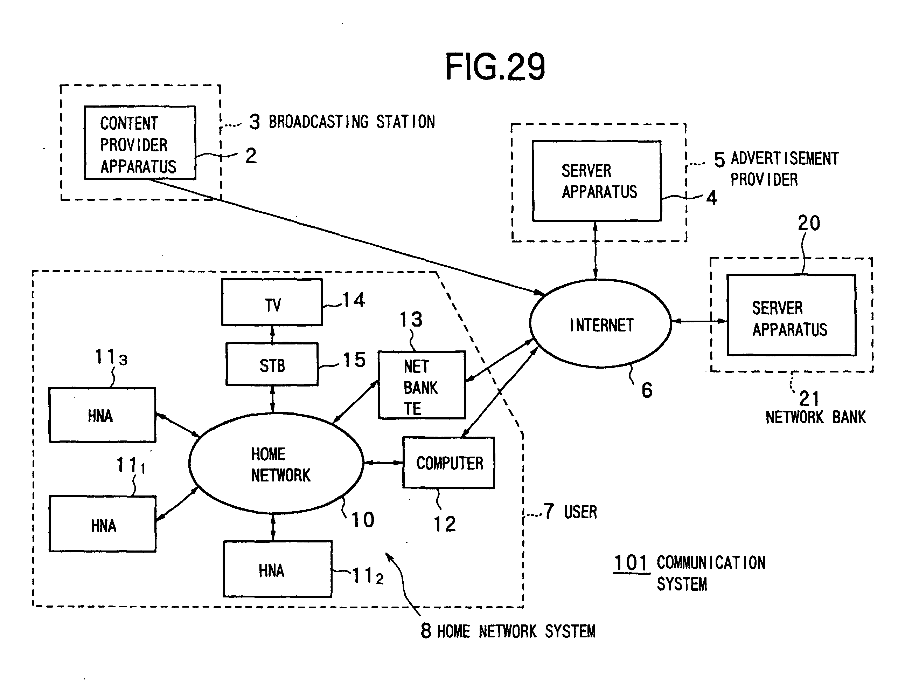

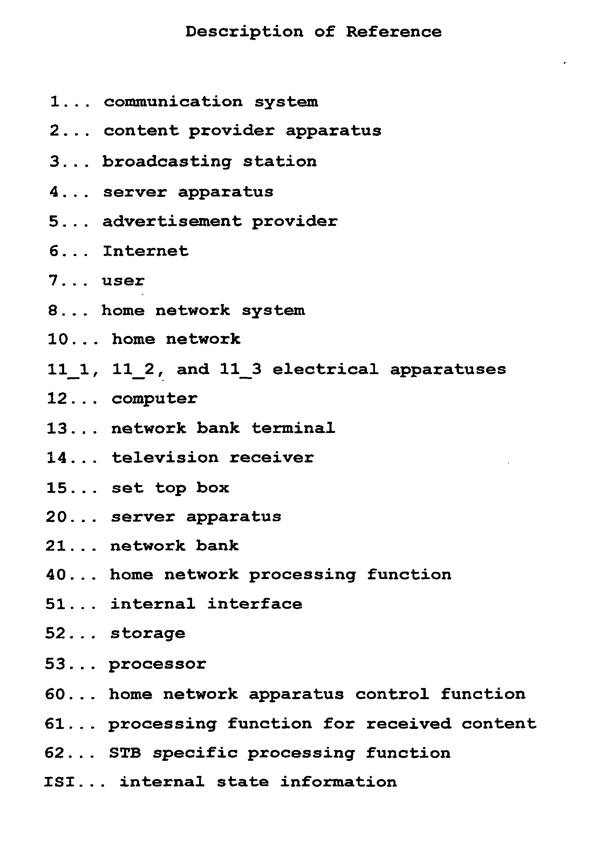

Further, for example, as shown in Fig. 29, the content information may be transmitted from the content provider apparatus 2 to the computer 12 of the home network system 8 via the Internet 6.

Further, the present invention may be configured that the usage form information UFI_1 is broadcasted from the content providing apparatus together with the content information and received by the STB 15 without using the server apparatus 4.

Further in the embodiment described above, the case when the computer 12 is connected with the Internet 6 is exemplified, but any of the electrical apparatus 11_1, 11_2, 11_3 may be connected with the Internet 6, and the electrical apparatuses connected with the Internet 6 may further be realized with the function of the computer 12 described above.

Further, the content information shown in Fig.26 and Fig.27 indicates that a default of a content is selected when a corresponding usage form information cannot be obtained.

Further in the embodiment described above, a case when the net bank terminal apparatus 13 produces the internal state information ISI and transmits the ISI to the STB 15 is exemplified, but the internal ISI may be produced at any of the electrical apparatus 11_1, 11_2 and 11_3 and the set top box 15.

An example of this case is shown as follows.

For example, a case when the electrical apparatus 11_1 is a refrigerator and an light bulb of the refrigerator has burnt out will be explained.

In this case, the electrical apparatus 11_1.produces the internal state information ISI indicating that the light bulb at a predetermined position has burnt out, and transmits the ISI to the set top box 15 via the home network 10.

Further, the server apparatus 4 transmits the usage form information UFI_1 relating to a commercial content of the light bulb via the Internet 6, the computer 12 and the home network 10 to the set top box 15.

Then the set top box 15 produces the usage form information UFI_2 using the internal state information ISI and the usage form information IFI_1.

Then the content provider apparatus 2 broadcasts the commercial content information of the light bulb of a plurality of type, and the set top box 15 receives the commercial content information.

The set top box 15 produces an output content information for selecting and outputting the commercial of the light bulb used by the refrigerator among the received commercial content information of the light bulb of a plurality of type, and the television receiver apparatus 14 displays a screen in accordance with the output content information by using the usage form information UFI_2.

Further, as another example, consider that when for example the content provider apparatus 2 provides an application and there is a readable format for the electrical apparatus 11_1 to 11_3.

In this case, the set top box 15 may manage a readable format for the electrical apparatus 11_1 to 11_3 on the basis of the internal state information ISI and output the application of the format readable by each electrical apparatus among applications of a plurality of format received from the content provider apparatus 2.

Further, a CD (Compact Disc)-ROM (Read Only Memory) and other storage media may store an application program of a plurality of format and the usage form information indicating the usage form of the application program corresponding to the internal state of the electrical apparatus, and the electrical apparatus may read the application program matching the internal state of the electrical apparatus on the basis of the usage form information stored in the CD-ROM when the electrical apparatus reads the CD-ROM.

### INDUSTRIAL APPLICABILITY

As described above, according to the present invention, it is possible to provide an information processing method, an apparatus, a storage media and a program of the same capable of determining the usage form at the content user side according to both of the internal state of the content user side and the request of the content provider side while protecting the privacy of the content user side.

## Claims

1. An information processing method comprising:
a first transmitting step for transmitting a usage form information defining a usage form of a content information on the basis of an internal state of a content user side from content provider side to said content user side;
a second transmitting step for transmitting said content information from said content provider side to said content user side;
an internal state information producing step for producing an internal state information indicating said internal state of said content user side at said content user side;
a usage form determining step for determining a usage form of said content information at said content user side on the basis of said internal state information and said usage form information.

2. An information processing method as set forth in claim 1, wherein
said usage form determining step comprising:
a matching usage form information producing step for producing a matching usage form information matching the internal state of said content user side using said internal state information and said usage form information , and
a content information acquiring step for acquiring said content information on the basis of said matching usage form information.

3. An information processing method as set forth in claim 1, wherein
said usage form determining step further comprising
a step for selecting and acquiring a predetermined content information matching to said internal state from among a plurality of content information received from said content provider side.

4. An information processing method as set forth in claim 1,
wherein said internal state information indicates a state of an operation of an electrical apparatus positioned at said content user side and / or an environment in which said electrical apparatus is positioned.

5. An information processing method as set forth in claim 1,
wherein said content user side comprises a first electrical apparatus and a second electrical apparatus,
said internal state information producing step further comprising a step for acquiring and managing by said first electrical apparatus an internal state information of said second electrical apparatus,
said usage form determining step further comprising a usage form managing step for producing and managing a matching usage form information of said content information matching the internal state of said second electrical apparatus on the basis of said internal information acquired by said first electrical apparatus from said second electrical apparatus and said usage form information.

6. An information processing method as set forth in claim 4, wherein
said usage form managing step further comprising a content transmitting step for transmitting a predetermined content information among said content information provided from said content provider side on the basis of said matching usage form information to said second electrical apparatus.

7. An information processing method as set forth in claim 1, wherein
said internal state information producing step further comprising a private information acquiring step for acquiring a private information of content user side from outside via network and managing said private information as said internal state information.

8. An information processing method as set forth in claim 1, wherein
said internal state information producing step further comprising a private information acquiring step for acquiring a private information of content user side from outside via storage media and managing said private information as said internal state information.

9. An information processing method as set forth in claim 1,
wherein said content information comprises document type definition information defining an element and an attribute included in said content information and entity information of a content.

10. An information processing method as set forth in claim 1,
wherein said usage form information comprises information indicating steps for converting said content information to a usage form which said content user side is able to use.

11. An information processing method as set forth in claim 1,
wherein said internal state information comprise document type definition information defining an element and an attribute included in said internal state information and entity information indicating an internal state of said content user side.

12. An information processing method as set forth in claim 1,
wherein said content information includes information of at least one among a character, text, image, audio and video.

13. An information processing apparatus positioned at a content user side, comprising:
a usage form information acquiring means for acquiring a usage form information defining a usage form of content information on the basis of an internal state information of said content user side;
an internal state information acquiring means for acquiring and managing said internal state information; and
a usage form determining means for determining a usage form of said content information on the basis of said internal state information and said usage form information.

14. An information processing apparatus as set forth in claim 13, wherein
said usage form determining means comprising:
a matching usage form information producing means for producing a matching usage form information matching the internal state of said content user side using said internal state information and said usage form information, and
a content information acquiring means for acquiring said content information on the basis of said matching usage form information.

15. An information processing apparatus as set forth in claim 13, wherein
said usage form determining means selects and acquires a predetermined content information matching to said internal state from among a plurality of content information acquired from said content provider side.

16. An information processing apparatus as set forth in claim 13,
wherein said internal state information indicates an operation state of an information processing apparatus positioned at said content user side and / or an environment information in which said information processing apparatus is positioned.

17. An information processing apparatus as set forth in claim 13, wherein
said internal state information acquiring means updates said internal state information in accordance with a change of the internal state of said content user side.

18. An information processing apparatus as set forth in claim 13,
wherein
said internal state information acquiring means comprises an internal information managing means for acquiring, storing and managing the internal state information of said other electrical apparatus from said other electrical apparatus connected via a network, and
said usage form determining means comprises a usage form managing means for producing and managing a matching usage form information of said content information matching the internal state of said other electrical apparatus on the basis of said internal state information acquired from said other electrical apparatus and said usage form information.

19. An information processing apparatus as set forth in claim 18, wherein
said usage form managing means further comprising a content transmitting means for extracting a predetermined content information matching the internal state of said other electrical apparatus among said content information acquired from said content provider side on the basis of said matching usage form information and transmitting said predetermined content information to said other electrical apparatus.

20. An information processing apparatus as set forth in claim 13, wherein
said internal state information acquiring means r comprising a private information acquiring means for acquiring a private information of content user side from outside via a network and managing said private information as said internal state information.

21. An information processing apparatus as set forth in claim 13, wherein
said internal state information acquiring means comprising a private information acquiring means for acquiring a private information of content user side from outside via storage media and managing said private information as said internal state information.

22. An information processing apparatus as set forth in claim 13,
wherein said content information comprise document type definition information defining an element and an attribute included in said content information and entity information of a content.

23. An information processing apparatus as set forth in claim 13,
wherein said usage form information comprises information indicating means for converting said content information to a usage form which said content user side is able to use.

24. An information processing apparatus as set forth in claim 13,
wherein said internal state information comprise document type definition information defining an element and an attribute included in said internal state information and entity information indicating an internal state of said content use side.

25. An information processing apparatus as set forth in claim 13,
wherein said content information includes information at least one among a character, text, image, audio and video.

26. An information processing method performed at a content user side, comprising:
a usage form information acquiring step for acquiring a usage form information defining a usage form of content information on the basis of an internal state information of said content user side;
an internal state information acquiring step for acquiring and managing said internal state information; and
a usage form determining step for determining a usage form of said content information on the basis of said internal state information and said usage form information.

27. An information processing method as set forth in claim 26, wherein
said usage form determining step comprising:
a matching usage form information producing step for producing a matching usage form information matching the internal state of said content user side using said internal state information and said usage form information , and
a content information acquiring step for acquiring said content information on the basis of said matching usage form information.

28. An information processing method as set forth in claim 26, wherein
said usage form determining step selects and acquires a predetermined content information matching to said internal state from among a plurality of content information acquired from said content provider side.

29. An information processing method as set forth in claim 26,
wherein said internal state information indicates an operation state of an information processing method performed at said content user side and / or an environment information in which said information processing method is performed.

30. An information processing method as set forth in claim 26, wherein
said internal state information acquiring step updates said internal state information in accordance with a change of the internal state of said content user side.

31. An information processing method as set forth in claim 26,
wherein
said internal state information acquiring step comprises an internal information managing step for acquiring, storing and managing the internal state information of said other electrical apparatus from said other electrical apparatus connected via a network, and
said usage form determining step comprises a usage form managing step for producing and managing a matching usage form information of said content information matching the internal state of said other electrical apparatus on the basis of said internal state information acquired from said other electrical apparatus and said usage form information.

32. An information processing method as set forth in claim 31, wherein
said usage form managing step comprising a content transmitting step for extracting a predetermined content information matching the internal state of said other electrical apparatus among said content information acquired from said content provider side on the basis of said matching usage form information and transmitting said predetermined content information to said other electrical apparatus.

33. An information processing method as set forth in claim 26, wherein
said internal state information acquiring step comprising a private information acquiring step for acquiring a private information of content user side from outside via a network and managing said private information as said internal state information.

34. An information processing method as set forth in claim 26, wherein
said internal state information acquiring step comprising a private information acquiring step for acquiring a private information of content user side from outside via storage media and managing said private information as said internal state information.

35. An information processing method as set forth in claim 26,
wherein said content information comprise document type definition information defining an element and an attribute included in said content information and entity information of a content.

36. An information processing method as set forth in claim 26,
wherein said usage form information comprises information indicating step for converting said content information to a usage form which said content user side is able to use.

37. An information processing method as set forth in claim 26,
wherein said internal state information comprise document type definition information defining an element and an attribute included in said internal state information and entity information indicating an internal state of said content use side.

38. An information processing method as set forth in claim 26,
wherein said content information includes information of at least one among a character, text, image, audio and video.

39. A storage media storing a program capable of being read by a computer at a content user side, wherein
said program comprising:
a usage information acquiring procedure for acquiring a usage form information defining a usage form of content information on the basis of an internal state information of said content user side;
an internal state acquiring and managing procedure for acquiring and managing said internal state information; and
a usage form determining procedure for determining a usage form of said content information on the basis of said internal state information and said usage form information.

40. A program capable of being read by a computer at a content user side, wherein
said program comprising:
a usage information acquiring procedure for acquiring a usage form information defining a usage form of content information on the basis of an internal state information of said content user side;
an internal state acquiring and managing procedure for acquiring and managing said internal state information; and
a usage form determining procedure for determining a usage form of said content information on the basis of said internal state information and said usage form information.

41. An information processing apparatus comprising:
a usage form information acquiring means for acquiring from a storage media a usage form information defining a usage form of an application program stored in said storage media;
an internal state information producing means for producing an internal state information indicating an internal state of said information processing apparatus; and
a reading means for reading a matching application program from said storage media on the basis of the acquired usage form information and the produced internal state information.
